# EUROPEAN PATENT APPLICATION

(11) **EP 1 255 247 A2**
(43) Date of publication of application: **06.11.2002**
(21) Application number: 02008943.9
(22) Date of filing: 22.04.2002
(51) Int. Cl.: G11B 7/24

(54) **Solvent composition and coating fluid for an optical recording medium**

(30) Priority: 26.04.2001 JP 2001129906
(71) Applicant: ASAHI GLASS COMPANY LTD., Tokyo 100-8405 (JP)
(72) Inventor: Okamoto, Hidekazu, Yokohama-shi, Kanagawa (JP)
(74) Representative: Müller-Boré & Partner Patentanwälte

(57) **Abstract**

A solvent composition comprising (A) 2-(trifluoromethyl)-2,3,3-trifluoropropanol and (B) 2,2,3,4,4,4-hexafluorobutanol, wherein the ratio of (A)/(B) (by mass) is from 0.5/99.5 to 99.5/0.5.

## Description

The present invention relates to a coating fluid containing a laser absorbing dye, useful for the production of an optical recording medium, and a solvent composition useful as a solvent for the laser absorbing dye.

In recent years, optical recording media have been widely used to meet the demand of times for recording and transmitting a large quantity of information. The optical recording media include magneto-optical recording media, phase change optical recording media, chalcogen oxide optical recording media and organic dye type optical recording media. Among them, an organic dye type optical recording medium containing a laser absorbing dye in its recording layer, such as CD-R or DVD-R, has found a rapid increase in demand in recent years for such a reason as being inexpensive.

In an organic dye type optical recording medium, it is common that various layers such as a recording layer and a reflective layer, are formed on a transparent resin substrate having a guide groove on its surface. When a thin film is to be formed on such a transparent resin substrate by means of a coating fluid containing a laser absorbing dye, the solvent for such a coating fluid is required to have characteristics such that it is capable of dissolving the laser absorbing dye, and at the same time, it does not damage the guide groove on the substrate. As solvents which can be used for such coating fluids, cellosolve type solvents have heretofore been known, and further, various fluorine-containing solvents have been proposed, such as a fluorinated alcohol, a hydrofluorocarbon, a fluorine-containing amine, a fluorine-containing nitrile, a fluorine-containing ketone, a fluorine-containing ester, a fluorine-containing ether, a fluorine-containing carboxyl compound, a fluorine-containing amide and a fluorine-containing nitro compound.

Most of such conventional cellosolve type solvents and fluorine-containing solvents, are incapable of dissolving a laser absorbing dye at a high concentration. A fluorinated alcohol disclosed in e.g. JP-A-63-159090, JP-A-2-4581, JP-A-4-8585 or JP-A-4-337538, particularly 2,2,3,3-tetrafluoropropanol (TFP), is used as a solvent for the above-mentioned laser absorbing dye.

However, TFP has high affinity to water, and it is difficult to use its coating fluid for forming a recording layer by recycling, since the pot life of such a coating fluid is short, and in a so-called recycling step of recovering and reusing an excess amount, water is likely to be included in the recovered coating fluid, thereby leading to decomposition of the above-mentioned laser absorbing dye or deterioration of the solubility.

Octafluoropentanol (OFP) as a fluorinated alcohol, has a low solubility of water as compared with TFP and thus has a good recycling characteristic, but its boiling point is so high that the vaporization rate is low, and shortening of tact time is limited, whereby it is not suitable for efficient production.

Further, as a specific example of a solvent for a laser absorbing dye, 2,2,3,4,4,4-hexafluorobutanol (HFB: 1H,1H,3H-hexafluorobutanol) is disclosed in e.g. JP-A-2000-326631. However, by a study conducted by the present inventors, it has been found that although HFB dissolves the dye at a high concentration, does not damage a resin substrate and has a vaporization rate equal to the above-mentioned TFP, the affinity to water is not sufficiently low, and a further improvement is required in order to attain a practical number of recycling.

The present inventors have conducted an extensive research to solve the above-mentioned conventional problems and as a result, have found that a certain specific hexafluorobutanol solvent composition is excellent as a solvent for a coating fluid for an optical recording medium. Namely, such a specific solvent composition is capable of dissolving a laser absorbing dye at a high concentration, capable of being used for practical recycling and capable of accomplishing a substantial improvement in the productivity by shortening tact time. Besides, a coating fluid employing such a solvent composition can be uniformly coated on a substrate even when an injection molded transparent resin substrate is employed as the substrate.

The present invention provides a solvent composition comprising (A) 2-(trifluoromethyl)-2,3,3-trifluoropropanol and (B) 2,2,3,4,4,4-hexafluorobutanol, wherein the ratio of (A)/(B) (by mass) is from 0.5/99.5 to 99.5/0.5.

Further, the present invention provides a coating fluid for an optical recording medium, which comprises such a solvent composition and a laser absorbing dye dissolved therein.

In the present invention, the solvent composition comprising (A) 2-(trifluoromethyl)-2,3,3-trifluoropropanol (hereinafter sometimes referred to as TMTP) and (B) 2,2,3,4,4,4-hexafluorobutanol (hereinafter sometimes referred to as HFB) can easily be obtained by subjecting hexafluoropropene and methanol to addition reaction in the presence of a radical initiator.

In the present invention, the ratio of TMTP (A)/HFB (B) (by mass) is from 0.5/99.5 to 99.5/0.5. The ratio of (A)/(B) is preferably from 1/99 to 60/40. If the content of TMTP is too small, such will be disadvantageous from the viewpoint of improving the recycling property and attaining an adequate pot life, due to hygroscopicity, and if it is too large, such will be disadvantageous from the viewpoint of the substantial cost for the solvent.

In the present invention, the laser absorbing dye is preferably one which can be dissolved in the above solvent composition at a high concentration, and particularly preferred is one having light absorptivity in a wavelength range of from 400 to 900 nm and a molar absorption coefficient of from 10³ to 10⁶ cm⁻¹. As an organic dye to be used as such a laser absorbing dye, a phthalocyanine dye, a naphthalocyanine dye, a formazan nickel dye, a cyanine dye, a picoline dye, a naphtholactam dye, an azulene dye, a squarilium dye, a metal-containing indoaniline dye, a metal-containing azo dye, a dithiol nickel dye, an anthraquinone dye, a bisanthrone dye, a phthaloyl naphthalimide dye, a cyanomethylene picoline dye, a naphthoquinone methide dye, an indoaniline dye, a naphthoquinone dye, a phenothiazine dye or a condensed ring dye, may, for example, be mentioned. As a particularly preferred laser absorbing dye, a cyanine dye, a phthalocyanine dye or a metal-containing azo dye may be mentioned.

A recording layer containing such a dye as the main component, may be formed on a resin substrate, for example, by a usual method such as spin coating. To the coating fluid for forming the recording layer, a solvent other than the above TMTP (A) and the above HFB (B), may be incorporated within a range not to impair the performance of the present invention.

The coating fluid for an optical recording medium in the present invention has the above-mentioned laser absorbing dye dissolved in the solvent composition comprising TMTP (A) and HFB (B), wherein the ratio of TMTP (A)/HFB (B) (by mass) is from 0.5/99.5 to 99.5/0.5.

In such a coating fluid, the content (by mass) of the laser absorbing dye is preferably from 0.1 to 10%, particularly preferably from 0.5 to 8.0%, based on the total amount of the coating fluid.

Further, the coating fluid for an optical recording medium in the present invention, may contain, in addition to the laser absorbing dye, a binder resin as the case requires. In a case where the binder resin is to be incorporated, it is preferred that the laser absorbing dye constitutes at least 10% (by mass) based on the binder resin. Further, in order to improve light resistance and stability of a recording layer to be formed by means of such a coating fluid, a transition metal chelate compound (a transition metal chelate compound employing e.g. acetyl acetonate, biphenyl dithiol, salicyl aldehyde oxime or bisdithio-α-diketone) may, for example, be incorporated as a singlet oxygen quencher.

In the present invention, the coating fluid containing a laser absorbing dye, is coated on a resin substrate by spin coating after it is subjected to filtration with a filter of 0.3 µm or less. The rotational speed of the spin coating is preferably from 500 to 10,000 rpm. The thickness of the coated film after drying is preferably from 30 to 300 nm.

Now, the present invention will be described in further detail with reference to Examples. However, it should be understood that the present invention is by no means restricted by such specific Examples. In the following, Examples 1 to 3 are Preparation Examples, Examples 4 to 6, 8 and 10 are Working Examples of the present invention and Examples 7 and 9 are Comparative Examples.

### EXAMPLES 1 to 3

Into a pressure resistant reactor having an internal capacity of 100 ℓ, 40 kg of methanol and 2 kg of di-tert- butyl peroxide (Perbutyl-D, tradename, manufactured by NOF CORPORATION) were charged, and then, the interior of the reactor was flushed with nitrogen and heated to 125°C. With stirring, hexafluoropropene was continuously supplied so that the inner pressure of the reactor would be 0.7 MPa (gauge pressure). After supplying 37 kg of hexafluoropropene, the reaction was terminated. The content was cooled to room temperature and then withdrawn, and the content was purified by distillation to obtain 1.2 kg of 2-(trifluoromethyl)-2,3,3-trifluoropropanol (TMTP) and 35 kg of 2,2,3,4,4,4-hexafluorobutanol (HFB). Using the obtained TMTP and HFB, the solvent compositions shown in Table 1 were prepared. In Table 1, "%" is by mass.

**Table 1**

| | TMTP (%). | HFB (%) |
|---|---|---|
| Example 1 | 90 | 10 |
| Example 2 | 50 | 50 |
| Example 3 | 7 | 93 |

### EXAMPLES 4 to 6

10 g of the solvent composition prepared in each of Examples 1 to 3 was sampled and stirred and mixed with 10 g of water for 1 minute, followed by being left to stand still for 5 minutes, whereupon the lower layer was sampled, and the water content in the prepared fluid was analyzed. The analysis was carried out by means of a very small amount water content analyzer CA-100 (Karl Fischer's method), manufactured by Mitsubishi Chemical Corporation. The results are shown in Table 2. Symbol ⓞ indicates that the water content was less than 8%, symbol ○ indicates a water content of from 8 to 9%, and symbol × indicates a water content of more than 9%.

### EXAMPLE 7

Using 10 g of 2,2,3,4,4,4-hexafluorobutanol (HFB-1) having a purity of 99.9%, a test was carried out in the same manner as in Examples 4 to 6, and the dissolved water content was evaluated. The results are shown in Table 2. The evaluation standards of the water content were as mentioned above.

**Table 2**

| | Solvent composition | Results of evaluation of the water content |
|---|---|---|
| Example 4 | Example 1 | ⓞ |
| Example 5 | Example 2 | ○ |
| Example 6 | Example 3 | ○ |
| Example 7 | HFB-1 | X |

### EXAMPLES 8 and 9

30 g of the solvent composition prepared in Example 1 was put into a 100 ml beaker and held at room temperature in an open system, to trace the change with time of the moisture absorption (Example 8). 30 g of HFB-1 (purity: 99.9%) was evaluated in the same manner (Example 9). The results are shown in Table 3.

**Table 3**

| | Solvent composition | Initial (ppm) | 70 hours later (ppm) | 300 hours later (ppm) | 1,000 hours later (ppm) |
|---|---|---|---|---|---|
| Ex. 8 | Example 1 | 80 | 6,000 | 7,500 | 8,000 |
| Ex. 9 | HFB-1 | 90 | 7,500 | 9,000 | 10,000 |

### EXAMPLE 10

0.15 g of a cyanine dye having a polymethine structure and 0.05 g of a quencher having an ionic structure were dissolved in 7.5 g of the solvent composition of Example 3, followed by filtration with a filter of 0.22 µm to obtain a coating fluid. Then, the coating fluid was dropped on an injection molded polycarbonate resin substrate (diameter: 5 inches) provided with a groove having a depth of 70 nm and a width of 0.7 µm and coated by spin coating at a rotational speed of 1,000 rpm. The coating was followed by drying at 70°C for 20 minutes to form a coating film (film thickness: 100 nm) containing the cyanine dye.

Then, on the above coating film, a silver film having a thickness of 100 nm was formed by sputtering to form a reflective layer. And, on this reflective layer, a UV curable resin is spin coated and then cured to form a protective layer having a thickness of 10 µm (10,000 nm), to obtain an optical recording medium. This optical recording medium was irradiated with a semiconductor laser beam having a central wavelength of 780 nm with a recording power of 6.6 mW, while rotating the optical recording medium at a speed of 1.4 m/sec, whereby EFM signals were recorded. Thereafter, the above recorded portion was reproduced by a CD player equipped with a semiconductor laser having the same wavelength as mentioned above, whereby good reproducing signals were obtained. Further, tests on light resistance (xenon fade meter acceleration test: 60 hours) and on the storage stability (70°C, 85 RH: 500 hr) were carried out, whereby as compared with the initial stage, no deterioration in the sensitivity and the reproduced signals, was observed, and it was excellent as an optical recording medium.

The solvent composition of the present invention is a solvent composition which has low hygroscopicity as compared with a case where conventional 2,2,3,4,4,4-hexafluorobutanol (HFB) was employed and which does not damage a resin substrate to be used for an optical recording medium and is excellent in the solubility of a laser absorbing dye, and thus it is practically useful by recycling. The coating fluid containing a laser absorbing dye, employing such a solvent composition, can be uniformly coated without damaging a resin substrate, to form an excellent recording layer on the resin substrate, in the production of an optical recording medium.

The entire disclosure of Japanese Patent Application No. 2001-129906 filed on April 26, 2001 including specification, claims and summary are incorporated herein by reference in its entirety.

## Claims

1. A solvent composition comprising (A) 2-(trifluoromethyl)-2,3,3-trifluoropropanol and (B) 2,2,3,4,4,4-hexafluorobutanol, wherein the ratio of (A)/(B) (by mass) is from 0.5/99.5 to 99.5/0.5.

2. The solvent composition according to Claim 1, wherein the ratio of (A)/(B) (by mass) is from 1/99 to 60/40.

3. The solvent composition according to Claim 1 or 2, which further contains a laser absorbing dye, wherein the content (by mass) of the laser absorbing dye is from 0.1 to 10% based on the total amount of the solvent composition.

4. A coating fluid for an optical recording medium, which comprises the solvent composition as defined in claim 1 or 2, and a laser absorbing dye dissolved in the composition.

5. The coating fluid for an optical recording medium according to Claim 4, wherein the laser absorbing dye is a dye having light absorptivity in a wavelength range of from 400 to 900 nm and a molar absorption coefficient of from 10³ to 10⁶ cm⁻¹.

6. The coating fluid for an optical recording medium according to Claim 4 or 5, wherein the laser absorbing dye is a cyanine dye, a phthalocyanine dye or a metal-containing azo dye.

7. The coating fluid for an optical recording medium according to Claim 4, 5 or 6, wherein the content (by mass) of the laser absorbing dye is from 0.1 to 10% based on the total amount of the coating fluid.

8. A process for producing an optical recording medium, which comprises coating the coating fluid as defined in anyone of claims 4 to 7 on a resin substrate by spin coating, followed by drying.

9. The process according to Claim 8, wherein the rotational speed of the spin coating is from 500 to 10,000 rpm.

10. The process according to Claim 8 or 9, wherein the thickness of the coated film after drying is from 30 to 300 nm.
